# EUROPÄISCHE PATENTANMELDUNG

(11) **EP 2 778 408 A1**
(43) Veröffentlichungstag der Anmeldung: **17.09.2014**
(21) Anmeldenummer: 14157422.8
(22) Anmeldetag: 03.03.2014
(51) Int. Cl.: F03G 7/06

(54) **Thermoventil**

(30) Priorität: 15.03.2013 IT BZ20130016
(71) Anmelder: Autotest Spa AG, 39011 Lana (IT)
(72) Erfinder: Unterholzner, Josef, 39011 Lana (IT); Telch, Markus, 39011 Lana (IT); Strickner, Gerhard, 39011 Lana (IT); Merzi, Claudio, 39011 Lana (IT)
(74) Vertreter: Ausserer, Anton

(57) **Zusammenfassung**

Beschrieben wird ein Thermoventil (1), umfassend ein Gehäuse (2), einen Verschluss (3), einen den Verschluss (3) aufnehmenden Sitz (4), im Gehäuse (2) ausgenommene Eingangs/Ausgangsleitungen (6,7) für ein Fluid und eine die Eingangs/Ausgangsleitung verbindende und mit dem Sitz (4) versehene Verbindungsleitung (5).

Gemäß der Erfindung ist der Verschluss (3) im Sitz (4) drehbar aufgenommen und aufweist an seinem Kopf (8) eine Einbuchtung (9), die in einer Position die Verbindungsleitung (5) mit den Eingangs/Ausgangsleitungen (6, 7) verbindet und in einer zweiten Position den Fluss zwischen der Verbindungsleitung (5) und der Eingangs/Ausgangsleitungen (6, 7) derart unterbricht, dass in einem gewissen Winkelbereich der Durchfluss möglich ist und ab einem gewissen Winkel der Durchfluss unterbrochen wird, wobei der Verschluss (3) ein Stellelement (13) aufweist, das mit einem Wärmefühler zusammenwirkt.

## Beschreibung

Die vorliegende Erfindung bezieht sich auf ein Thermoventil gemäß dem Oberbegriff des Anspruchs 1.

Ein Thermoventil dieser Art dient dazu, einen Fluidfluss je nach Temperatur in einem Raum, zum Beispiel eines Kraftfahrzeuges zu verbinden und zu unterbrechen.

In der deutschen Patentanmeldung DE 40 30383 ist ein von der Temperatur abhängiges Arbeitselement mit einem Gehäuse, einem in einem Hohlraum im Gehäuse enthaltenen, bei Erwärmung dehnbarem Material, einem im Gehäuse geführten und im dehnbaren Material bei dessen Dehnung verstellbaren Kolben und einem Heizelement beschrieben, das dazu dient das dehnbare Material zu erhitzen.

Das Heiz- und Dehnelement ist ein elastisches Element aus einem elektrisch leitenden Kunststoff, zum Beispiel einen Thermoplasten, der durch elektrische Energie gespeist und daher gedehnt werden kann und in ihm eingeschlossene, insbesondere dispergierte leitfähige Teilchen aus leitfähigem Metall enthält.

Ein Arbeitselement dieser Art, vor allem zum Beispiel ein Sensor, greift elektrisch ein, sobald der zu überwachende Raum oberhalb einer bestimmten Temperatur erhitzt wird. Überdies erfordert ein derartiges Arbeitselement ein dehnbares Material, das durch Strom erhitzt wird. Das Arbeitselement dieser Anmeldung ist sehr kompliziert und schwierig zu montieren.

Die Aufgabe der vorliegenden Erfindung ist daher, die Nachteile bekannter Thermoventile und insbesondere jene des oben beschriebenen Thermoventils zu vermeiden, und ein Thermoventil vorzuschlagen, das schneller reagiert, kleinere Abmessungen besitzt und gegenüber jenen dem Stand der Technik angehörenden Thermoventilen leichter montierbar ausgeführt ist.

Diese Aufgabe wird durch ein Thermoventil mit den Merkmalen des kennzeichnenden Teils des Anspruchs 1 gelöst.

Durch die Anwendung eines Drehverschlusses, der von einer zwischen dem Verschluss und der festen Stelle des Gehäuses gespannten Spiralfeder betätigt wird, wird bei Änderung der Temperatur in den interessierenden Räumen, die Spiralfeder bewegt und führt Drehverschluss dazu, mit seiner Einbuchtung von einer Position, wo die im Gehäuse ausgenommenen Eingangs- und Ausgangsleitungen miteinander verbunden sind, in eine Position gedreht zu werden, in der die Wand der Einbuchtung eine der Leitungen schließt, wobei so der Fluidstrom zwischen den beiden Eingangs- und Ausgangsleitungen unterbrochen wird. Somit wird ein Thermoventil mit einem sehr leicht zu bauenden Aufbau erhalten, das unmittelbar im gewünschten Raum angebracht werden kann.

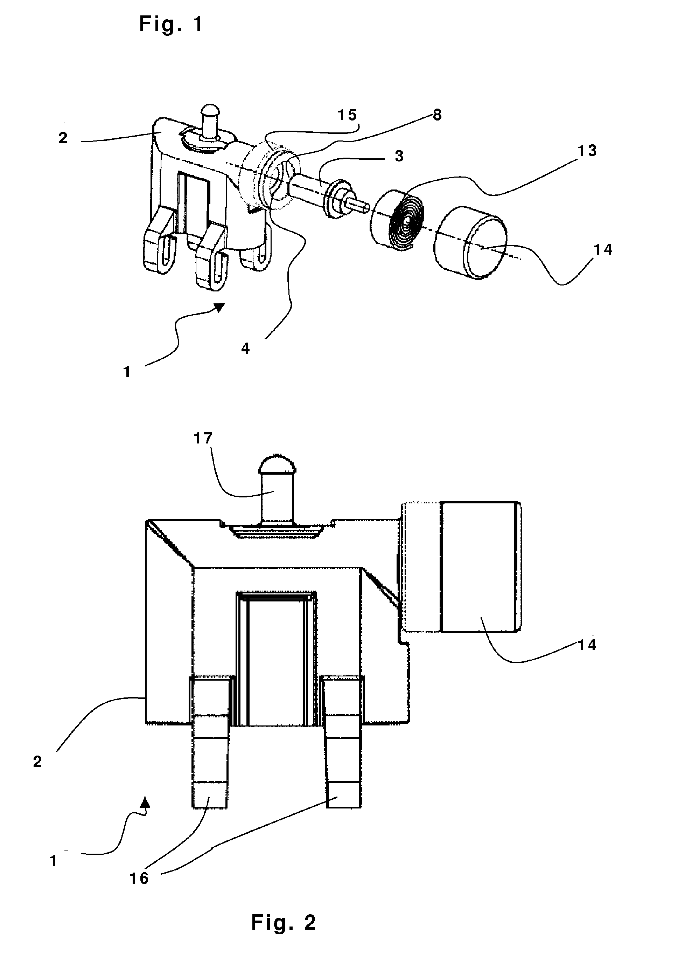

Weitere Merkmale und Einzelheiten gehen aus den Patentansprüchen und der folgenden Beschreibung eines nicht begrenzenden, bevorzugten Ausführungsbeispiels hervor, das in der beigefügten Zeichnung dargestellt ist. Es zeigen
- Figur 1: ein Explosionsschaubild eines erfindungsgemäßen Thermoventils,
- Figur 2: eine Seitenansicht eines erfindungsgemäß zusammengesetzten Thermoventils,

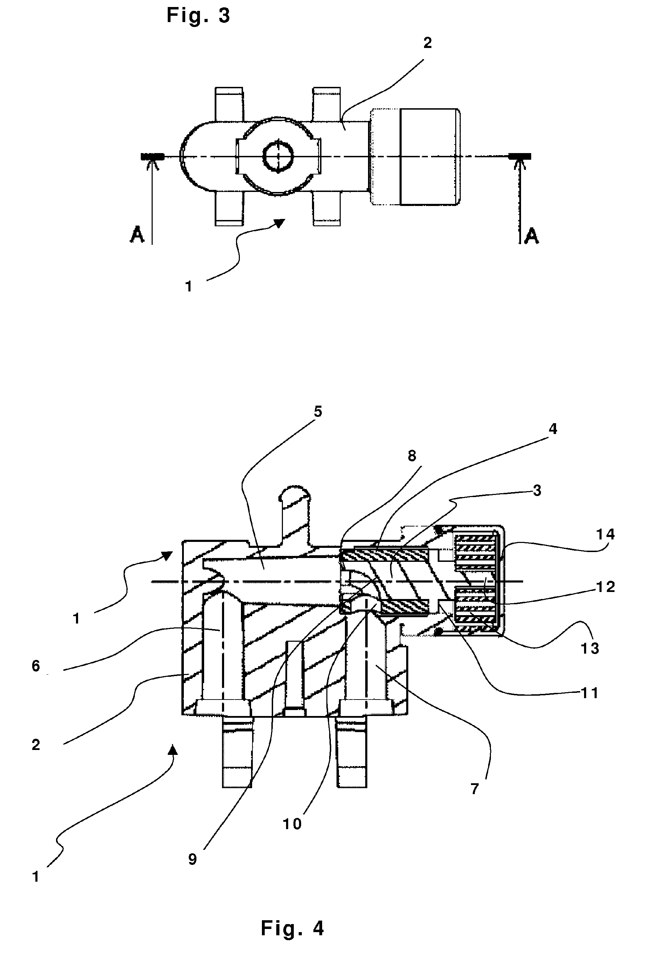

- Figur 3: eine Draufsicht von Figur 2,
- Figur 4: einen Schnitt gemäß der Linie A-A aus Figur 3, und
- Figur 5: eine Ansicht eines erfindungsgemäßen Thermoventils in einer Variante.

In den Figuren ist mit der Bezugsziffer 1 in seiner Gesamtheit ein erfindungsgemäßes Thermoventil gezeigt. dem eine Einbuchtung 9 ausgenommen ist, ist derart ausgebildet, dass der Kopf 8 in Richtung einer im Sitz 4 ausgenommenen Öffnung 10 in einer ersten Position geöffnet und in einer zweiten Position, das heißt mit dem um 180 Grad gedrehten Verschluss 3, geschlossen ist.

Der Verschluss weist an seinem der Einbuchtung 9 abgewandten Ende, eine Schulter auf, die am äußeren Ende des Sitzes 4 gleitet, und an dem ein Axialbolzen 12 festliegt. Am Axialbolzen 12 ist das Innere Ende einer Spiralfeder 13 befestigt, dessen anderes Ende an der Innenwand eines Deckels 14 befestigt ist. Der Deckel 14 ist an einem Ring 15 befestigt, zum Beispiel aufgeschraubt, der am Gehäuse 2 fest liegt. An einer Seite ist das Gehäuse 2 mit Befestigungsflanschen 16 versehen und an einer dieser abgewandten Seite ist ein Befestigungsvorsprung 17 vorgesehen.

Zahlreiche Varianten und Änderungen können am beschriebenen Thermoventil vorgenommen werden, ohne den in den folgenden Ansprüchen festgelegten Schutzbereich zu verlassen.

In einer bevorzugten Ausführungsform waren ist das Thermoventil 1 gemäß der Erfindung fähig, auf einem Wärmeaustauscher, einem Kühler, in einem Kraftfahrzeuge angebracht werden.

Die Spiralfeder 13 ist in dieser Ausführungsform über eine wärmeleitendes Zahlreiche Varianten und Änderungen können am beschriebenen Thermoventil vorgenommen werden, ohne den in den folgenden Ansprüchen festgelegten Schutzbereich zu verlassen.

In einer bevorzugten Ausführungsform ist das Thermoventil 1 gemäß der Erfindung fähig, auf einem Wärmeaustauscher, einem Kühler, einer Scheibenwaschanlage und in einem Kraftfahrzeug angebracht zu werden.

Die Spiralfeder 13 ist in dieser Ausführungsform über ein wärmeleitendes Element mit dem Axialbolzen 12 oder mit der Innenwand des Deckels 14 oder mit beiden verbunden.

Dieses wärmeleitende Element kann beispielsweise aus Metall, wie Kupfer bestehen.

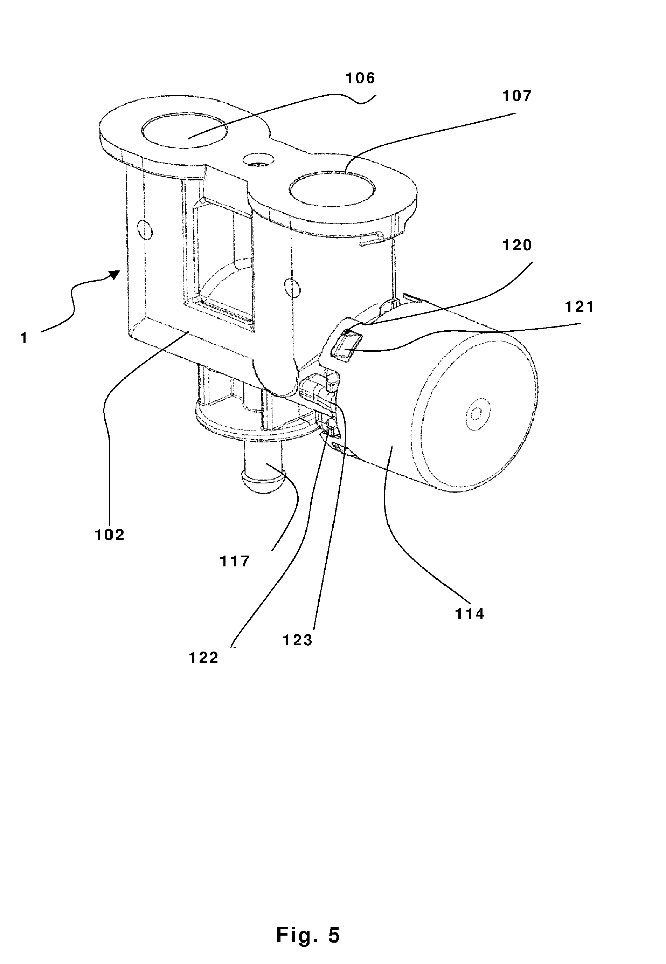

In der in Figur 5 dargestellten Variante ist ein Gehäuse 102 nur mit einem Vorsprung 117 versehen, während die Flanschen für die Montage fehlen. Ein Deckel 114 ist in diesem Falle im Bereich seiner Öffnung mit Durchbrüchen 120, in die Nasen 121 des Gehäuses 102 einschnappen, sowie mit Einbuchtungen 123 versehen, welche an entsprechenden Nasen 122 anliegen. Der Randbereich der Eingangs/Ausgangsleitungen 106 und 107 liegt in einer Ebene um die Montage an Anschlussteilen zu erleichtern.

In einer weiteren Ausführungsform gemäß der vorliegenden Erfindung wird anstelle einer Spiralfeder als Stellelement des Bolzens ein Permanentmagnet verwendet, der kontaktlos mit einem Permanentmagnet als Arbeitselement zusammenwirkt, der mit einem Bimetallstreifen in jener Art verbunden ist, dass sich bei einer Temperaturänderung die Länge des Streifens ändert und sich somit das Arbeitselement dreht, wodurch entsprechend auch das Stellelement und mit diesem der Bolzen geschwenkt wird. So erfolgte für das Thermoventil eine kontaktfreie Drehmomentübertragung mittels einer Permanentmagnetkupplung, die durch einen Bimetallstreifen angetrieben wird, der sich im direkten Kontakt mit einer zu überwachenden Flüssigkeit befindet. Der Abschlussdeckel der Behälterwand befindet sich zwischen Drehventil und Bimetallstreifen.

### Liste der Bezugsziffer

1 Thermoventil
2 Gehäuse
3 Verschluss
4 Sitz
5 Leitung
6 Eingangs/Ausgangsleitung
7 Eingangs/Ausgangsleitung
8 Kopf
9 Einbuchtung
10 Öffnung
11 Ringschulter
12 Bolzen
13 Spiralfeder
14 Gehäuse
15 Ring
16 Flansche
17 Vorsprung
102 Deckel
106 Eingangs/Ausgangsleitung
107 Eingangs/Ausgangsleitung
117 Vorsprung
120 Durchbruch
121 Nase
122 Nase
123 Einbuchtung

## Patentansprüche

1. Thermoventil (1), umfassend ein Gehäuse (2), einen Verschluss (3), einen den Verschluss (3) aufnehmenden Sitz (4), im Gehäuse (2) ausgenommene Eingangs/Ausgangsleitungen (6,7) für ein Fluid und eine die Eingangs/Ausgangsleitung verbindende und mit dem Sitz (4) versehene Verbindungsleitung (5),
**dadurch gekennzeichnet, dass** der Verschluss (3) im Sitz (4) drehbar aufgenommen ist und an seinem Kopf (8) eine Einbuchtung (9) aufweist, die in einer Position die Verbindungsleitung (5) mit den Eingangs/Ausgangsleitungen (6, 7) verbindet und in einer zweiten Position den Fluss zwischen der Verbindungsleitung (5) und der Eingangs/Ausgangsleitungen (6, 7) derart unterbricht, dass in einem gewissen Winkelbereich der Durchfluss möglich ist und ab einem gewissen Winkel der Durchfluss unterbrochen wird, wobei der Verschluss (3) ein Stellelement (13) aufweist, das mit einem Wärmefühler zusammenwirkt.

2. Thermoventil (1) nach Anspruch 1, **dadurch gekennzeichnet**, der Verschluss (3) durch eine zwischen dem Verschluss und dem Gehäuse gespannte Spiralfeder (13) drehbelastet ist.

3. Thermoventil (1) nach Anspruch 1, **dadurch gekennzeichnet, dass** der Verschluss (3) eine Verlängerung (12) aufweist, die mit dem inneren Ende der Spiralfeder (13) verbunden ist, wobei das äußere Ende der Spiralfeder (13) am Gehäuse (2) befestigt ist.

4. Thermoventil (1) nach Anspruch 1, **dadurch gekennzeichnet, dass** als Stellelement des Bolzens ein Permanentmagnet verwendet wird, der kontaktlos mit einem Permanentmagnet als Arbeitselement zusammenwirkt, der mit einem Bimetallstreifen der Art verbunden ist, dass sich bei einer Temperaturänderung die Länge des Streifens ändert und sich somit das Arbeitselement dreht, wodurch entsprechend auch das Stellelement und mit diesem der Bolzen geschwenkt wird, wobei so für das Thermoventil eine kontaktfreie Drehmomentübertragung mittels einer an sich bekannten Permanentrnagnetkupplung erfolgt, die durch einen Bimetallstreifen angetrieben wird, der sich im direkten Kontakt mit einer zu überwachenden Flüssigkeit befindet.

5. Thermoventil (1) nach den vorstehenden Ansprüchen, **dadurch gekennzeichnet, dass** es an einem Wärmeaustauscher, einem Kühler, einer Scheibenwaschanlage und in einem Kraftfahrzeug angeordnet ist.
